# EUROPÄISCHE PATENTSCHRIFT

(11) **EP 0 867 793 B1**
(45) Veröffentlichungstag und Bekanntmachung des Hinweises auf die Patenterteilung: **19.09.2001**
(21) Anmeldenummer: 98103800.3
(22) Anmeldetag: 04.03.1998
(51) Int. Cl.: G05B 19/18, G05B 19/418

(54) **Verfahren zur Steuerung von Arbeitsaufträgen in einem integrierten Produktionssystem**
Method for controlling jobs in an integrated manufacturing system
Procédé pour contrôler des tâches dans un système de fabrication intégré

(30) Priorität: 25.03.1997 DE 19712360
(43) Veröffentlichungstag der Anmeldung: 30.09.1998
(73) Patentinhaber: Dr. Johannes Heidenhain GmbH, 83292 Traunreut (DE)
(72) Erfinder: Kaesberg, Jürgen, Dipl.-Ing., 83313 Siegsdorf (DE); Rutkowski, Christian, Dipl.-Phys., 83278 Traunstein (DE)

(56) Entgegenhaltungen:
- EP-A- 0 829 790
- US-A- 5 231 585

## Beschreibung

Die Erfindung betrifft ein Verfahren zur Steuerung eines integrierten Produktionssystems gemäß dem Anspruch 1.

Im Rahmen der Entwicklung einer zunehmend automatisierten und rationalisierten Fertigung werden Werkzeugmaschinen nicht mehr manuell vom Bediener, sondern numerisch gesteuert. Eine derartiges NC-Steuersystem ist aus der EP 0 450 647 B1 bekannt. Hierbei wird auf einer Chip-Karte ein Arbeitsplan für einen Bediener einer NC-Werkzeugmaschine sowie Arbeitsanweisungen gespeichert. Zusätzlich können auf der Chip-Karte auch Programme, Parameter und Werkzeuginformationen gespeichert werden. Der Bediener führt der NC-Werkzeugmaschine die Chip-Karte zu, wodurch er sich als berechtigter Bediener der NC-Werkzeugmaschine identifiziert und läßt sich zumindest einen Teil der gespeicherten Informationen anzeigen. Anschließend führt er die Arbeit, z.B. eines Tages, entsprechend den gespeicherten Arbeitsanweisungen aus. Die durchgeführten Arbeiten werden wiederum auf der Chip-Karte gespeichert, so daß ein Vorgesetzter mit der Chip-Karte detaillierte Angaben über die Tätigkeit des Bedieners erhält.

Dabei ist von Nachteil, daß die Übertragung von Informationen mittels einer Chip-Karte ein relativ unflexibles Übertragungssystem darstellt. Für eine kurzfristige Änderung des Arbeitsablaufs muß die Chip-Karte umprogrammiert bzw. neu programmiert werden. Da die Chip-Karte aber als Zugangsberechtigung zur NC-Werkzeugmaschine dient und die Chip-Karte für eine Programmierung der NC-Werkzeugmaschine entnommen werden muß, entstehen zwangsläufig lange Stillstandszeiten durch eine Änderung des Arbeitsablaufs.

Aus der US 5,231,585 ist eine computer-integrierte Fertigung bekannt, bei der von einem Benutzer an einer NC-Maschine der Fertigung eine Losnummer eines Arbeitsauftrags eingegeben wird und daraufhin von einem zentralen Host, mit dem die NC-Maschine über einen Datenbus verbunden ist, NC-Daten mit Hilfe eines Informations-Management-Systems angefordert werden. Aufgrund dieser Anforderung überträgt der Host auch Daten an weitere NC-Maschinen dieser Fertigung, beispielsweise über Teilebezeichnungen, die zu dieser Losnummer gehören und die Reihenfolge, in der die Teile benötigt werden. Weiterhin werden auch Daten bezüglich der abgearbeiteten Losnummern von den NC-Maschinen an den Host übertragen.

Ein Nachteil dieser computer-integrierten Fertigung ist deren geringe Flexibilität und mangelnde Benutzerführung. Dem Benutzer wird keine Hilfestellung zur Auswahl einer bestimmten Losnummer geben, wodurch der Benutzer nicht unmittelbar am Arbeitsplatz zwischen dringenden und weniger dringenden Aufträgen unterscheiden kann. Bei Eingabe eine falschen Losnummer wird der falsche Auftrag abgearbeitet, ohne daß der Benutzer dies unmittelbar bemerkt, bevor weitgehende Arbeitsvorbereitungen durchgeführt werden.

Aufgrund der Weiterentwicklung von Herstellungsverfahren haben neuere Erkenntnisse gezeigt, daß Gruppenarbeit einer Fließbandarbeit vorzuziehen ist. Dabei stellt eine Gruppe Beschäftigte eine bestimmte Baugruppe eigenverantwortlich her. Dies beinhaltet neben der Fertigung von Einzelteilen und Montage auch die Qualitätskontrolle und in bestimmten Grenzen auch die Terminplanung. Dadurch entsteht für den einzelnen Beschäftigten die Möglichkeit, sich die Arbeit in bestimmten Grenzen aussuchen zu können. Dazu trägt auch die Entwicklung von NC-Werkzeugmaschinen bei, die nicht mehr spezifisch als Drehmaschine oder Fräsmaschine, sondern allgemein als Bearbeitungszentrum realisiert werden. Ein solches Bearbeitungszentrum weist sowohl die Funktionalität einer Dreh- als auch einer Fräsmaschine auf, wodurch eine große Vielfalt an Bearbeitungsmöglichkeiten mit einer einzigen NC-Werkzeugmaschine ermöglicht wird.

Es ist daher die Aufgabe der vorliegenden Erfindung ein möglichst flexibles Verfahren zur Steuerung eines integrierten Produktionssystems anzugeben, das es dem Benutzer ermöglicht Arbeitsaufträge direkt an der NC-Werkzeugmaschine auszuwählen und ihn dabei unterstützt.

Diese Aufgabe wird durch die Merkmale des Anspruchs 1 gelöst.

Weitere vorteilhafte Ausgestaltungen sind den abhängigen Ansprüchen zu entnehmen.

Das erfindungsgemäße Verfahren zur Steuerung eines integrierten Produktionssystems weist den Vorteil auf, daß unmittelbar an jeder NC-Werkzeugmaschine eine Abfrage der im Server gespeicherten Arbeitsaufträge möglich ist. Bei einer Abfrage der Arbeitsaufträge an einer NC-Werkzeugmaschine werden Beschreibungen der Arbeitsaufträge von der NC-Werkzeugmaschine am Server abgerufen, die sowohl von dieser NC-Werkzeugmaschine als auch von dem jeweiligen Benutzer, beispielsweise aufgrund dessen Qualifikation, bearbeitet werden können. Dadurch werden nicht alle vorhandenen Arbeitsaufträge an die NC-Werkzeugmaschine übertragen und dort ausgegeben, sondern nur kurze Beschreibungen derjenigen Arbeitsaufträge, deren Bearbeitung dem Benutzer an dieser Maschine überhaupt möglich ist. Dadurch wird eine Vorauswahl getroffen, die dem Benutzer die Auswahl eines bestimmten Arbeitsauftrags erleichtert und Fehler bei der Auswahl verhindert. Weiterhin wird dadurch die Belastung des Datennetzes verringert. Dem Benutzer wird dann die Auswahl eines Arbeitsauftrags unter den angezeigten Arbeitsaufträgen aufgrund der angezeigten Beschreibungen ermöglicht. Sobald dieser seine Wahl getroffen hat, werden die vollständigen Daten von der NC-Werkzeugmaschine am Server abgerufen und gegebenenfalls weitere Daten durch die NC-Werkzeugmaschine an andere Stellen der Fertigung zur Anforderung von Material und/oder Werkzeug übertragen.

Das erfindungsgemäße Verfahren soll nun anhand der Zeichnungen näher beschrieben und erläutert werden. Es zeigen:
- Fig. 1:: eine mögliche schaltungstechnische Realisierung des erfindungsgemäßen integrierten Produktionssystems und
- Fig. 2:: einen möglichen Programmablaufplan für die Auswahl und Bearbeitung eines Arbeitsauftrags im integrierten Produktionssystem.

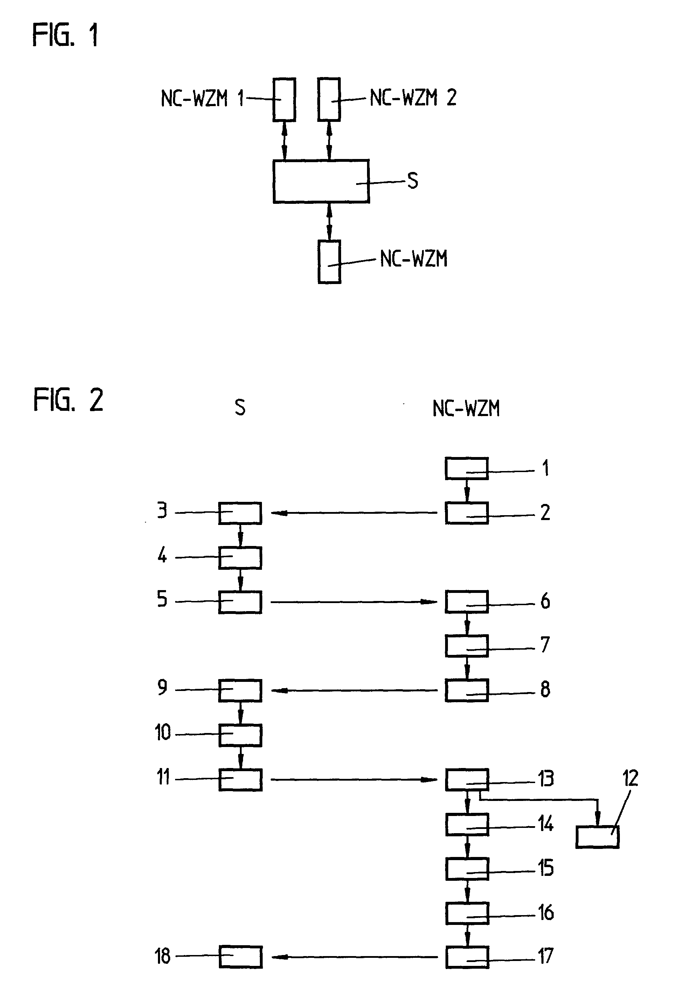

Fig. 1 zeigt eine mögliche Netzwerkstruktur für ein Datennetz, bei dem mindestens eine numerisch gesteuerte Werkzeugmaschinen NC-WZM, NC-WZM1, NC-WZM2 oder andere computergersteuerte Maschinen mit mindestens einem Server S verbunden werden. Dabei sind beliebige Netzwerkstrukturen möglich, wie beispielsweise Stern-, Ring- oder Busstrukturen. Dadurch können durch jede Werkzeugmaschinen NC-WZM, NC-WZM1, NC-WZM2 Dienste in Anspruch genommen werden, die durch einen oder mehrere Server S bereitgestellt werden. Ein derartiger Dienst kann beispielsweise in der Bereitstellung von NC-Programmen oder in einer Verwaltung von Betriebsmitteln bestehen, die von einer Werkzeugmaschine NC-WZM am Server S abgerufen werden.

Das erfindungsgemäße Verfahren soll im folgenden anhand von Fig. 2 exemplarisch erläutert werden.

Damit ein Benutzer eine erfindungsgemäße Werkzeugmaschine NC-WZM benutzen kann, muß er zunächst in einem ersten Schritt 1 der Fig. 2 seine persönliche Benutzeridentifikation an einer Eingabeeinheit der Werkzeugmaschine NC-WZM eingeben. Da diese nur dem Benutzer persönlich bekannt sein sollte, wird zwar eine korrekte Eingabe bestätigt, die Benutzeridentifikation aber nicht auf der Anzeigeeinheit angezeigt.

Sobald die Benutzeridentifikation eingegeben wurde, überträgt die Werkzeugmaschine NC-WZM diese zusammen mit einer für die Werkzeugmaschine NC-WZM individuellen Kennung im Schritt 2 an den Server S.

Der Server S empfängt die Benutzeridentifikation und die Kennung der Werkzeugmaschine NC-WZM im Schritt 3 und wertet diese aus. Anhand der Benutzeridentifikation erkennt der Server S, ob der Benutzer berechtigt ist, an dieser Werkzeugmaschine NC-WZM zu arbeiten und, falls dies der Fall ist, welche Qualifikation der Benutzer hat. Anhand der Kennung der Werkzeugmaschine erkennt der Server S, welche Arbeiten an dieser Werkzeugmaschine NC-WZM durchgeführt werden können.

Bei der Eingabe von neuen Arbeitsaufträgen am Server S werden zusammen mit anderen Daten auch Informationen über die zur Durchführung des Arbeitsauftrags erforderliche Werkzeugmaschinentyp, die erforderlichen Produktionsmittel, wie Werkzeuge, Materialien, Betriebsmittel, NC-Programme usw., abgespeichert. Weiterhin wird eine Information zu der bei der Bearbeitung benötigten Qualifikation und eine kurze Beschreibung des Arbeitsauftrags gespeichert. Vorteilhaft werden diese jedem Arbeitsauftrag zugeordneten zusätzlichen Daten in einer Datenstruktur organisiert und gespeichert, so daß unmittelbar auf eine bestimmte Information, wie erforderlicher Werkzeugmaschinentyp, Schwierigkeitsgrad oder Beschreibung zugegriffen werden kann. Dies ermöglicht es, einen einzelnen Arbeitsauftrag oder eine Gruppe Arbeitsaufträge anhand einer bestimmten Information, wie beispielsweise der Beschreibung, zu erkennen.

Der Server S sucht nun im Schritt 4 durch einen Vergleich von mit den Arbeitsaufträgen gespeicherten Daten und den von der Werkzeugmaschine NC-WZM empfangenen Daten die Arbeitsaufträge, bei denen der gespeicherte Werkzeugmaschinentyp mit der Kennung der Werkzeugmaschine NC-WZM übereinstimmt und bei denen die erforderliche Qualifikation des Benutzers mit der für die Bearbeitung des Arbeitsauftrags erforderlichen Qualifikation übereinstimmt. Die gespeicherten Beschreibungen der derart ermittelten Arbeitsaufträge werden dann im Schritt 5 vom Server S für die Werkzeugmaschine NC-WZM bereitgestellt und von dieser im Schritt 6 vom Server S abgerufen und in deren Anzeigeeinheit dem Benutzer angezeigt. Die Übertragung nur der Beschreibung anstelle des gesamten Arbeitsauftrags ist dabei vorteilhaft, da dies weniger Übertragungskapazität benötigt und der Benutzer anhand der Beschreibung einen Arbeitsauftrag besser erkennt, als wenn andere Daten des Arbeitsauftrags übertragen würden. Durch die Vorauswahl unter den Arbeitsaufträgen wird dem Benutzer somit die Auswahl eines Arbeitsauftrags erleichtert. Weiterhin werden durch diese Vorauswahl Fehler vermieden, die dadurch entstehen könnten, daß der Benutzer beispielsweise einen Arbeitsauftrag auswählt, der an der vom Benutzer ausgewählten Werkzeugmaschine NC-WZM gar nicht bearbeitet werden kann.

Der Benutzer kann sich aufgrund der angezeigten Beschreibungen im Schritt 7 eigenverantwortlich eine der Beschreibungen zur Bearbeitung auswählen.

Hat der Benutzer dies getan, wird durch die Werkzeugmaschine NC-WZM im Schritt 8 am Server S der ausgewählte Arbeitsauftrag aufgrund der vom Benutzer gewählten Beschreibung abgerufen. Im einzelnen wird dafür der Arbeitsauftrag im Schritt 9 als in Bearbeitung befindlich gekennzeichnet. Anschließend wählt die Werkzeugmaschine am Server S den zu der Beschreibung passenden Arbeitsauftrag im Schritt 10 aus dem Speicher aus und überträgt den Arbeitsauftrag im Schritt 11 und 13 vollständig vom Server S in den der Werkzeugmaschine NC-WZM zugeordneten Speicher. Zu dem Arbeitsauftrag gehören dabei beispielsweise NC-Programme, sowie Werkzeug- und Materialdaten.

In jeder Werkzeugmaschine NC-WZM, NC-WZM1 sind Daten gespeichert, welche Informationen über die an der Werkzeugmaschine unmittelbar vorhandenen Produktionsmittel, wie beispielsweise Material, Werkzeuge, Betriebsmittel etc., beinhalten.

Sollten die für den Arbeitsauftrag benötigten Produktionsmittel nicht unmittelbar an der Werkzeugmaschine vorhanden sein, erkennt dies die Werkzeugmaschine NC-WZM durch einen Vergleich der vorhandenen mit den benötigten Produktionsmitteln. Die Werkzeugmaschine NC-WZM überträgt dann im Schritt 12 zusätzlich Daten über die an der Werkzeugmaschine NC-WZM benötigten und nicht vorhandenen Werkzeuge, Materialien, Betriebsmittel und sonstige Produktionsmittel, die zur Bearbeitung des ausgewählten Arbeitsauftrags benötigt werden automatisch an die dafür zuständigen Stellen, beispielsweise die Werkzeugausgabe, Materialausgabe etc., die diese entweder für eine Abholung bereithalten oder zur Werkzeugmaschine transportieren.

Die an die Werkzeugmaschine NC-WZM übertragenen Daten werden dort im Schritt 13 in einem Speicher abgelegt, um immer eine aktuelle Information über die lokal verfügbaren Produktionsmittel zu haben. Anschließend kann der Benutzer, sofern alle Produktionsmittel bereitstehen, den Arbeitsauftrag im Schritt 14 bearbeiten.

Während der Bearbeitung werden im Schritt 15 von der Werkzeugmaschine NC-WZM Daten über die Ausführung des Arbeitsauftrags erzeugt, wie beispielsweise Betriebsdauer, Stückzahl und Fehlerquote.

Nachdem der Arbeitsauftrag entweder durch Abbruch oder Erledigung beendet ist, werden im Schritt 16 an die entsprechenden Stellen Meldungen übertragen, daß die Produktionsmittel zurückgegeben werden können. Weiterhin werden im Schritt 17 die Daten über die Ausführung des Arbeitsauftrags an den Server S übertragen.

Die an den Server S übertragenen Daten über die Ausführung des Arbeitsauftrags werden dort im Schritt 18 empfangen und gespeichert. Sie stehen für eine weitere Verarbeitung, beispielsweise für eine Fehlererfassung oder Nachkalkulation zur Verfügung.

## Patentansprüche

1. Verfahren zur Steuerung eines Systems zur computer-integrierten Fertigung, bestehend aus mindestens einem Server (S) und mindestens einer numerisch gesteuerten Werkzeugmaschine (NC-WZM, NC-WZM1, NC-WZM2), welche zumindest mit dem Server (S) über ein Datennetz verbunden ist, bei dem eine von einem Benutzer an einer der numerisch gesteuerten Werkzeugmaschinen (NC-WZM) eingegebene Benutzeridentifikation (1) an einen Server (S) weitergeleitet wird (2, 3), der Server (S) aufgrund der Benutzeridentifikation und aufgrund der Information von welcher numerisch gesteuerten Werkzeugmaschine (NC-MZM, NC-WZM1, NC-WZM2) die Benutzerinformation übertragen wurde aus einem gespeicherten Vorrat Arbeitsaufträge auswählt (4) und Beschreibungen für diese Arbeitsaufträge zum Abruf durch die numerisch gesteuerte Werkzeugmaschine (NC-WZM) bereitstellt (5), welche von der Werkzeugmaschine (NC-WZM) beim Abruf in ihren lokalen Speicher übertragen werden (6), der Benutzer aus den abgerufenen Beschreibungen eine zur Bearbeitung auswählt (7), und die numerisch gesteuerte Werkzeugmaschine (NC-WZM) aufgrund der ausgewählten Beschreibung (8) den zugehörigen Arbeitsauftrag und Daten, welche die numerisch gesteuerte Werkzeugmaschine (NC-WZM) zur Bearbeitung des Arbeitsauftrags benötigt, vom Server (S) abruft (12,13).

2. Verfahren nach Anspruch 1, bei dem ein an einer der numerisch gesteuerten Werkzeugmaschinen (NC-WZM, NC-WZM1, NC-WZM2) in Bearbeitung befindlicher Arbeitsauftrag durch den Server (S) entsprechend gekennzeichnet wird (9).

3. Verfahren nach Anspruch 1 oder 2, bei dem nach Beenden des Arbeitsauftrags an der numerisch gesteuerten Werkzeugmaschine (NC-WZM) durch diese automatisch Daten über die Ausführung des Arbeitsauftrags an den Server (S) übertragen werden (17).

4. Verfahren nach einem der Ansprüche 1 - 3, bei dem die durch die numerisch gesteuerte Werkzeugmaschine (NC-WZM) am Server (S) abgerufenen Daten vollständig in der numerisch gesteuerten Werkzeugmaschine (NC-WZM) gespeichert werden (11, 13).

5. Verfahren nach einem der Ansprüche 1 - 4, bei dem Daten über den Arbeitsauftrag von der numerisch gesteuerten Werkzeugmaschine (NC-WZM) und/oder Server (S) an mindestens eine weitere numerisch gesteuerte Werkzeugmaschine (NC-WZM1, NC-WZM2) und/oder Server übertragen werden (12).

6. Verfahren nach einem der Ansprüche 1 - 5, bei dem die Benutzeridentifikation eine Information über die Qualifikation des Benutzers in codierter Form beinhaltet.

## Claims

1. Method for controlling a system for computer-integrated production, comprising at least one server (S) and at least one numerically controlled machine tool (NC-WZM, NC-WZM1, NC-WZM2), which is connected at least to the server (S) via a data network, in which a user identifier (1), input by a user at one of the numerically controlled machine tools (NC-WZM), is relayed (2, 3) to a server (S), the server (S) selects (4) jobs from a stored supply on the basis of the user identifier and the information regarding from which numerically controlled machine tool (NC-WZM, NC-WZM1, NC-WZM2) the user information was transferred, and makes available (5) descriptions for these jobs to be fetched by the numerically controlled machine tool (NC-WZM), which, when fetched, are transferred (6) from the machine tool (NC-WZM) to its local memory, the user selects (7) from the fetched descriptions one for processing, and the numerically controlled machine tool (NC-WZM) fetches (12, 13) from the server (S), on the basis of the selected description (8), the associated job and data which the numerically controlled machine tool requires to process the job.

2. Method according to claim 1, in which a job being processed at one of the numerically controlled machine tools (NC-WZM, NC-WZM1, NC-WZM2) is correspondingly identified (9) by the server (S).

3. Method according to claim 1 or 2 in which, when the job at the numerically controlled machine tool (NC-WZM) has been completed, data about the execution of the job is automatically transferred (17) by said machine tool to the server (S).

4. Method according to one of claims 1 to 3, in which the data fetched by the numerically controlled machine tool (NC-WZM) from the server (S) is stored (11, 13) completely in the numerically controlled machine tool (NC-WZM).

5. Method according to one of claims 1 to 4, in which data about the job is transferred (12) from the numerically controlled machine tool (NC-WZM) and/or server (S) to at least one further numerically controlled machine tool (NC-WZM1, NC-WZM2) and/or server.

6. Method according to one of claims 1 to 5, in which the user identifier contains information in coded form about the qualification of the user.

## Revendications

1. Procédé de commande d'un système de fabrication assistée par ordinateur, comprenant au moins un serveur (S) et au moins une machine-outil à commande numérique (NC-WZM, NC-WZM1, NC-WZM2) qui est connectée au moins au serveur (S) par l'intermédiaire d'un réseau de données, selon lequel une identification d'utilisateur (1) entrée par un utilisateur sur l'une des machines à commande numérique (NC-WZM) est transmise (2, 3) à un serveur (S), le serveur (S), sur la base de l'identification d'utilisateur et sur la base de l'information de machine-outil à commande numérique (NC-WZM, NC-WZM1, NC-WZM2) à partir de laquelle l'information d'utilisateur a été transmise, sélectionne (4) des tâches dans un répertoire stocké en mémoire et prépare (5) des descriptions pour ces tâches à des fins d'appel par la machine-outil à commande numérique (NC-WZM), lesquelles tâches lorsqu'elles sont appelées par la machine-outil à commande numérique (NC-WZM) sont transférées (6) dans la mémoire locale de celle-ci, l'utilisateur sélectionne (7) une description pour l'usinage parmi les descriptions appelées et la machine-outil à commande numérique (NC-WZM), sur la base de la description (8) sélectionnée, appelle(12, 13) dans le serveur (S) la tâche correspondante et les données dont la machine-outil à commande numérique (NC-WZM) a besoin pour l'exécution de la tâche.

2. Procédé selon la revendication 1, selon lequel une tâche en cours d'exécution sur l'une des machines-outils à commande numérique (NC-WZM, NC-WZM1,NC-WZM2) est repérée en conséquence (9) par le serveur (S).

3. Procédé selon la revendication 1 ou 2, selon lequel une fois la tâche terminée sur la machine-outil à commande numérique (NC-WZM), cette dernière transmet (17) de manière automatique au serveur (S) des données sur l'exécution de la tâche.

4. Procédé selon une des revendications 1 à 3, selon lequel les données appelées sur le serveur (S) par la machine-outil à commande numérique (NC-WZM) sont intégralement sotckées (11, 13) dans la machine-outil à commande numérique (NC-WZM).

5. Procédé selon une des revendications 1 à 4, selon lequel les données concernant la tâche sont transmises (12) par la machine-outil à commande numérique (NC-WZM) et/ou le serveur (S) à au moins une machine-outil à commande numérique (NC-WZM 1, NC-WZM2) et/ou un serveur supplémentaire.

6. Procédé selon une des revendications 1 à 5, selon lequel l'identification d'utilisateur contient une information sous forme codée sur la qualification de l'utilisateur.
